(19) Europäisches Patentamt / European Patent Office / Office européen des brevets

(11) EP 4 019 674 A1

(12) EUROPEAN PATENT APPLICATION
published in accordance with Art. 153(4) EPC

(43) Date of publication:
**29.06.2022 Bulletin 2022/26**

(21) Application number: **20855431.1**

(22) Date of filing: **15.01.2020**

(51) International Patent Classification (IPC):
***D01F 6/60*** (2006.01) ***D01F 6/90*** (2006.01)
***C08L 77/06*** (2006.01) ***C08G 69/28*** (2006.01)
***D01F 1/10*** (2006.01)

(52) Cooperative Patent Classification (CPC):
**C08L 77/06; D01D 5/08; D01D 5/088; D01D 5/092; D01F 6/60; D01F 6/90; D02G 1/20;** C08G 69/28; D01F 1/10

(86) International application number:
**PCT/CN2020/072235**

(87) International publication number:
**WO 2021/031529 (25.02.2021 Gazette 2021/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.08.2019 CN 201910776328**

(71) Applicants:
- **Cathay Biotech Inc.**
  **Shanghai 201203 (CN)**
- **Cibt America Inc.**
  **Newark DE 19713 (US)**

(72) Inventors:
- **SUN, Chaoxu**
  **Shanghai 201203 (CN)**
- **LIU, Xiucai**
  **Shanghai 201203 (CN)**

(74) Representative: **Vossius & Partner Patentanwälte Rechtsanwälte mbB**
**Siebertstraße 3**
**81675 München (DE)**

# (54) POLYAMIDE 56 FIBRE WITH LOW BOILING WATER SHRINKAGE RATE, PREPARATION METHOD THEREFOR, AND APPLICATION THEREOF

(57) The present invention relates to the technical field of polyamide materials, and provides a polyamide 56 pre-oriented yarn and a polyamide 56 draw textured yarn with a low shrinkage in boiling water, a process for producing the same and a use thereof. The raw materials for producing the polyamide 56 fiber comprise 1,5-pentane diamine and adipic acid, or a polyamide 56 resin obtained by polymerizing 1,5-pentane diamine monomer and adipic acid monomer; wherein the polyamide 56 fiber has a shrinkage in boiling water of 9% or less, wherein the polyamide 56 fiber comprises a polyamide 56 pre-oriented yarn with a low shrinkage in boiling water and a polyamide 56 draw textured yarn with a low shrinkage in boiling water. The polyamide 56 fiber has good mechanical properties, dyeing uniformity and dimensional stability. The process for producing the polyamide 56 fiber does not require modification to existing equipments for texturing polyamide fibers and thus reduces production costs.

EP 4 019 674 A1

## Description

### Technical Field

The present invention relates to the technical field of polyamide materials, and provides a polyamide 56 pre-oriented yarn and a polyamide 56 draw textured yarn with a low shrinkage in boiling water, a process for producing the same and a use thereof.

### Background Art

Polyamide fiber has a large shrinkage in boiling water, shrinks seriously during a dyeing process, and tends to cause uneven dying. The shrinkage is great especially during a robbin dyeing process. The yarns have different tensions in the outer part and inner part of the package. Due to their greater tension, the yarns adjacent to a bobbin are quite difficult to be penetrated by the dye and thus are difficult to be dyed, resulting in a chromatic aberration between the outer part and the inner part of the package. Secondly, during the unwinding of the package, the tension changes after contraction, making it difficult to unwinding and causes yarns to break, which increases processing difficulty and production costs. The yarns shrink greatly in boiling water, causing the width of a fabric to decrease during the dyeing process, and thus it is difficult to control the width of the fabric. Especially after the fabric is subsequently made into clothing, if the shrinkage is large when the clothing is washed in hot water, the shape retention of the clothing is poor.

There have been patents which reported polyamide 56 medium-strength yarns and high-strength yarns and preparing method thereof. For example, patent CN 106835329 A discloses a polyamide 5X medium-strength yarn and a process for producing the same. Patent CN 106868624 A discloses a polyamide 5X high-strength yarn and a process for producing the same. Such yarns have a low shrinkage in boiling water of 2-7%, mainly owing to their different processing methods. Multiple pairs of hot rollers are used for stretching the yarns during the processing, and a high temperature setting is also performed. The crystallinity and orientation degree of such fibers are high, and the proportion of the amorphous region is small, which is ultimately indicates a small shrinkage in boiling water and a good dimensional stability. Patent CN 106868623 A discloses a bio-based, high-elastic, moisture-absorbing and easily-dyed long carbon chain polyamide 5X fiber and the process for producing the same. The fiber also has a low shrinkage in boiling water of 3-10%. The raw materials used are long carbon chain polyamides 510, 512 and the like, and non-short carbon chain polyamide 56, and a continuous bulking filament processing method is applied. Patent CN 100489168 C discloses a process for producing a polyester drawn-texturing yarn (DTY) with a low shrinkage in boiling water. The yarn has a low shrinkage in boiling water, and the material for the yarn is polyester. The polyester fiber has a low rate of moisture regain of 0.4%, and thus is not easy to absorb water, and has good dimensional stability. Secondly, two stretching rollers and two stretching hot boxes are used for the polyester draw textured yarn. The stretching time and the setting time are relatively long, the crystallinity and the orientation degree of the yarn are high, and the shrinkage thereof in boiling water is also relatively low. However, it is difficult to reduce the shrinkage of the yarn in boiling water by applying a polyamide pre-oriented and draw textured yarn process.

### Summary of the Invention

A first object of the present invention is to provide a polyamide 56 fiber with a low shrinkage in boiling water, and meantime having good mechanical properties and dyeing uniformity.

A second object of the present invention is to provide a process for producing polyamide 56 fiber with a low shrinkage in boiling water. In such process, the viscosity, the oligomer content, the molecular weight and the molecular weight distribution, and the moisture content of polyamide 56 resin are adjusted by optimizing its quality. In addition, a polyamide 56 pre-oriented yarn with a low shrinkage in boiling water and good mechanical properties are obtained by optimizing the spinning process for the polyamide 56 pre-oriented yarn. Finally, a polyamide 56 draw textured yarn having good mechanical properties, dyeing uniformity and low shrinkage in boiling water is obtained by texturizing the polyamide 56 pre-oriented yarn and adjusting the texturizing process, specifically by increasing the drawing ratio, increasing the stretching temperature, increasing the interlacing pressure, reducing the winding speed during texturing, applying an overfeeding process, increasing the crystallinity and orientation degree of the polyamide 56 draw textured yarn, and reducing the subsequent stress relaxation.

A third object of the present invention is to provide a use of the polyamide 56 fiber with a low shrinkage in boiling water.

The aforementioned polyamide 56 fiber with a low shrinkage in boiling water is used in knitted and woven fabrics, and is used in such fields as underwears, shirts, suits, down jackets, outdoor jackets, socks, bags and suitcases, curtains, shoe materials, embroidery threads, labels, sofa-covers, uniforms, sportswears, and elastic tapes.

In order to achieve the above objects, the present invention provides the following solutions:

[Polyamide 56 Fiber with Low Shrinkage in Boiling Water]

The present invention provides a polyamide 56 fiber, wherein raw materials for producing the polyamide 56 fiber comprise 1,5-pentane diamine and adipic acid, or a polyamide 56 resin obtained by polymerizing 1,5-pentane diamine monomer and adipic acid monomer; wherein the polyamide 56 fiber has a shrinkage in boiling water of 9% or less.

In some preferable embodiments of the present invention, the polyamide 56 fiber comprises a polyamide 56 pre-oriented yarn with a low shrinkage in boiling water and a polyamide 56 draw textured yarn with a low shrinkage in boiling water.

In some preferable embodiments of the present invention, the polyamide 56 resin has an oligomer content of 1.2 wt% or less, and preferably 0.8 wt% or less. For example, the oligomer content is 0.2-1.2 wt%, 0.4-0.8 wt%, or 0.4-1.2 wt%.

In some preferable embodiments of the present invention, the oligomer is selected from the following structures:

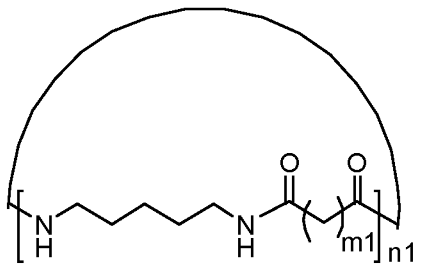 and 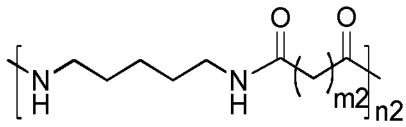 ,

wherein n1 and n2 are respectively selected from integers of 1-8, m1 and m2 are 4, preferably, n1 and n2 are respectively selected from integers of 1-6; more preferably, n1 and n2 each independently are integers of 1-5; and further preferably, n1 is 1, 2, 3 or 4; and n2 is 1, 2, 3, 4 or 5.

In one preferable embodiment of the present invention, the polyamide 56 fiber comprises a bright fiber, a semi-dull fiber a fully-dull polyamide 56 fiber.

In one preferable embodiment of the present invention, the polyamide 56 pre-oriented yarn with a low shrinkage in boiling water has a shrinkage in boiling water of 9% or less, further preferably 8% or less, and still further preferably 7% or less. In some preferable embodiments of the present invention, the polyamide 56 pre-oriented yarn with a low shrinkage in boiling water has a shrinkage in boiling water of 3-9%, further preferably 3-8%, and still further preferably 3-7%, such as 3.1%, 3.5%, 4.5%, 4.9% or 5.4%.

In some preferable embodiments of the present invention, the polyamide 56 pre-oriented yarn has a fineness of 10-300 dtex, preferably 20-200 dtex, further preferably 30-100 dtex, and still further preferably 50-80 dtex; and/or

the polyamide 56 pre-oriented yarn has a break strength of 3.0-4.5 cN/dtex, preferably 3.3-4.3 cN/dtex, further preferably 3.5-4.1 cN/dtex, and still further preferably 3.7-3.9 cN/dtex; and/or

the polyamide 56 pre-oriented yarn has an elongation at break of 60-90%, preferably 65-85%, further preferably 70-80%, and still further preferably 73-78%; and/or

the polyamide 56 pre-oriented yarn preferably has a dyeing uniformity (grey scale) of grade 3 or more, more preferably grade 3.5 or more, further preferably grade 4.0 or more, and still further preferably grade 4.5 or more.

In some preferable embodiments of the present invention, the polyamide 56 draw textured yarn with a low shrinkage in boiling water has a shrinkage in boiling water of 8% or less, further preferably 7% or less, and still further preferably 6% or less. In some preferable embodiments of the present invention, said polyamide 56 draw textured yarn has a shrinkage in boiling water of 2-8%, further preferably 2-7%, and still further preferably 2-6%, such as 2.5%, 3.1%, 3.5%, 4.5%, 4.9% or 5.4%.

In some preferable embodiments of the present invention, the polyamide 56 draw textured yarn has a fineness of 10-200 dtex, preferably 20-100 dtex, further preferably 30-80 dtex, and still further preferably 40-60 dtex; and/or

the polyamide 56 draw textured yarn has a break strength of 3.5-5.5 cN/dtex, preferably 3.8-5.0 cN/dtex, further preferably 4.0-4.7 cN/dtex, and still further preferably 4.3-4.5 cN/dtex; and/or

the polyamide 56 draw textured yarn has an elongation at break of 20-50%, preferably 25-45%, further preferably 30-40%, and still further preferably 33-36%; and/or

the polyamide 56 draw textured yarn has a crystallinity of 60% or more, preferably 63% or more, further preferably 66% or more, and still further preferably 68% or more. In some preferable embodiments of the present invention, the polyamide 56 draw textured yarn has a crystallinity of 60-80%, preferably 63-77%, further preferably 66-74%, and still further preferably 68-72%; and/or

the polyamide 56 draw textured yarn has an orientation degree of 60% or more, preferably 65% or more, further preferably 70% or more, and still further preferably 73% or more. In some preferable embodiments of the present invention, said polyamide 56 draw textured yarn has an orientation degree of 60-90%, preferably 65-85%, further preferably 70-80%, and still further preferably 73-78%; and/or

the polyamide 56 draw textured yarn preferably has a dyeing uniformity (grey scale) of grade 3 or more, preferably grade 3.5 or more, further preferably grade 4.0 or more, and still further preferably grade 4.5 or more.

[Process for Producing the Polyamide 56 Fiber with Low Shrinkage in Boiling Water]

The present invention further provides a process for producing the polyamide 56 pre-oriented yarn with a low shrinkage in boiling water, wherein the process comprises the following steps:

(1) polymerizing 1,5-pentane diamine and adipic acid to form a polyamide 56 melt; or heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice;

(3) cooling, spinning finishing, drawing and winding the extruded as-spun fiber to obtain the polyamide 56 pre-oriented yarn.

In step (1), the polyamide 56 resin has a relative viscosity of 2.4-2.8, preferably 2.5-2.7; the polyamide 56 resin has an oligomer content of 1.2 wt% or less, and preferably 0.8 wt% or less, for example, the polyamide 56 resin has an oligomer content of 0.2-1.2 wt%, 0.4-0.8 wt%, or 0.4-1.2 wt%; and/or

the polyamide 56 resin has a moisture content of 600-1200 ppm, and preferably 800-1000 ppm; and/or the polyamide 56 resin has a number average molecular weight of 15,000-22,000, and preferably 18,000-20,000, or has a molecular weight distribution of 1.0-2.0, and preferably 1.2-1.8; and/or

the screw is heated with four zones, wherein the temperature of a first zone is 245-260°C, and preferably 250-255°C; the temperature of a second zone is 260-275°C, and preferably 265-270°C; the temperature of a third zone is 275-285°C, and preferably 278-283°C; and the temperature of a fourth zone is 280-285°C, and preferably 282-284°C;

in Step (2), the temperature of the box is 275-285 °C, and preferably 280-283 °C; the pressure of the assembly is 13-20 MPa, and preferably 15-18 MPa;

in Step (3), the cooling comprises cooling with side air blow or cross air blow, preferably cooling with cross air blow; and an air speed is preferably 0.2-0.6 m/s, and further preferably 0.3-0.5 m/s; and/or an air temperature is 18-25°C, preferably 20-23°C, and further preferably 21-22°C; and/or

the spinning finishing is conducted with an oil roll; and an oil pick up is 0.2-0.8 wt%, preferably 0.3-0.7 wt%, and more preferably 0.4-0.5 wt%; and/or a winding speed is 4,000-5,500 m/min, preferably 4,300-5,000 m/min, and more preferably 4,500-4,800 m/min.

The invention further provides a process for producing the polyamide 56 draw textured yarn with a low shrinkage in boiling water, wherein the process comprises the following steps:

a) directing the polyamide 56 pre-oriented yarn to a first roller with a guide; conveying it through a twist stopper, and thermally drawing the pre-oriented yarn in a first hot box;

b) cooling and setting the pre-oriented yarn with a cooling plate; conveying it through a false twister, a second roller, and an interlacing device; and spinning finishing it with an oil roll; and

c) winding the pre-oriented yarn to obtain a polyamide 56 draw textured yarn.

A thermal drawing ratio is 1.1-1.5, preferably 1.15-1.4, and more preferably 1.2-1.3; and/or a thermal drawing temperature is 150-220°C, preferably 160-200°C, and more preferably 170-180°C; and/or

a speed ratio D/Y of the false twister is 1.3-2.2, preferably 1.5-2.0, and more preferably 1.7-1.8; and/or a pressure of compressed air in the interlacing device is 0.3-1.5 MPa, preferably 0.5-1.2 MPa, and more preferably 0.7-0.8 MPa; and/or

a winding speed is 300-800 m/min, preferably 400-700 m/min, and more preferably 500-600 m/min; and/or a winding overfeed is 2-8%, preferably 3-6%, and more preferably 4-5%.

The present invention further provides a use of the polyamide 56 fiber in knitted or woven fabrics.

The above-mentioned polyamide 56 fiber with a low shrinkage in boiling water is used in knitted and woven fabrics, including but not limited to the fields of underwears, shirts, suits, down jackets, outdoor jackets, socks, bags and suitcases, curtains, shoe materials, embroidery threads, labels, sofa-covers, uniforms, sportswears, elastic tapes, etc.

Advantageous effects of the present invention imparted by the above solutions are as follows:
Firstly, the raw materials for producing the polyamide 56 fiber with a low shrinkage in boiling water of the present invention may be prepared by a biological process, and thus are green materials. They neither depend on petroleum resources, nor cause serious pollution to the environment. Moreover, carbon dioxide emission and greenhouse effect can be reduced.

Secondly, the polyamide 56 fiber with a low shrinkage in boiling water of the present invention has good mechanical properties, dyeing uniformity and dimensional stability. Meanwhile, the polyamide 56 fiber obtained has a high quality grade by optimizing the quality of the polyamide 56 resin, and the spinning and texturing processes.

Thirdly, the polyamide 56 fiber with a low shrinkage in boiling water of the present invention can be produced by using conventional polyamide 6 texturing equipment. Application Requirements can be met by optimizing the processes, without modifying the texturing equipment, and thus the production costs can be reduced.

**Mode of Carrying Out the Invention**

In order to make the objects, technical solutions and advantages of the present disclosure clearer, the technical solutions of the present disclosure will be clearly and completely described hereinafter with reference to the Examples. Obviously, the Examples described are only a part but not all of the Examples of the present disclosure. All other Examples obtained by those of ordinary skill in the art based on the examples in the present disclosure and without involving creative work shall fall within the protection scope of the present disclosure.

(1) Fineness: measured according to GB/T 14343.

(2) Break Strength: measured according to GB/T 14344

(3) Elongation at Break: measured according to GB/T 14344.

(4) Thermal Crimp: measured according to FZ/T 50030.

(5) Shrinkage in Boiling Water: measured according to GB/6505.

(6) Dyeing Uniformity (Grey Card)/Grade: measured according to FZ/T 50008 Test Method for Dyeing Uniformity of Nylon Filament.

(7) Relative Viscosity:
The relative viscosity of polyamide 56 resin is measured by using concentrated sulfuric acid and an Ubbelohde viscometer in the following manner: precisely weighing 0.25±0.0002 g the dried polyamide 56 resin sample, adding 50 mL concentrated sulfuric acid (96%) for dissolution so as to obtain a polyamide 56 resin sample solution, and measuring and recording the flow time to of the concentrated sulfuric acid and the flow time of the polyamide 56 resin sample solution in a water bath at a constant temperature of 25°C.
Relative viscosity is calculated according to the following equation:

relative viscosity VN=t/to;
t represents the flow time of the solution; and

$t_0$ represents the flow time of the solvent.

(8) Moisture Content:
The moisture content is measured by a Karl Fischer moisture titrator.

(9) Crystallinity: Fiber samples is analyzed by using a D/max-2550 PC X-ray diffractometer manufactured by Rigaku Corporation, Japan under the following conditions: a Cu target wavelength $\lambda_{k_{\alpha 1}}$ = 1.54056 Å, a voltage of 20-40 kV, a current of 10-450 mA, and a measurement angle 2θ in the range of 5-40°. The polyamide 56 fiber sample used for measuring the crystallinity is sufficiently shredded, and the mass of the sample is greater than 0.2 g. The polyamide 56 fiber sample used for measuring the microcrystalline orientation was sufficiently combed. A bundle having a length of 30 mm is used for testing. Softwares such as Origin are used for data processing so as to analyze and calculate the crystallinity and the orientation degree of the fibers.
The following equation is used for calculating the crystallinity:

$$x = \frac{\sum I_c}{\sum I_c + \sum I_a} \times 100\%$$

wherein $\Sigma I_c$ is the total diffraction integral intensity of the crystalline part; $\Sigma I_a$ is the scattering integral intensity of the amorphous part.

(10) Orientation Degree: measured by an acoustic velocity orientation measuring instrument.

(11) Number Average Molecular Weight: measured by standard GPC.

(12) Molecular Weight Distribution: measured by gel permeation chromatography (GPC).

(13) Oligomer Content Test:
Water Extraction Method (gravimetry): 8 g of polyamide 56 resin, which has been dried at 130°C for 7 hours, is precisely weighed into a 500 mL round bottom flask. 400 g of water is added. After refluxing for 36 hours in a heating mantle, the solution is decanted. The particles are dried at 130°C in a constant-weight beaker for 7 hours, and then sealed into an aluminum-plastic bag to cool down, and weighed. The weight loss is calculated.

Polyamide 56 resins (in the form of chips), with a relative viscosity of 2.4-2.8 and an oligomer content of 1.2wt% or less, are prepared according to the methods disclosed in CN108503826A and CN108503824A. Polyamide 6 chips with a relative viscosity of 2.5-2.7 are commercially available from Ruimeifu Industrial Co., Ltd. (Jiangsu).

Example 1: Preparation of Polyamide 56 Pre-Oriented Yarn with Low Shrinkage in Boiling Water

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.5; an oligomer content of 0.8wt%; a moisture content of 800 ppm; a number average molecular weight of 18,000, and a molecular weight distribution of 1.6;

the screw was heated with four zones, wherein the temperature of a first zone was 250°C; the temperature of a second zone was 270°C; the temperature of a third zone was 285°C; and the temperature of a fourth zone was 280°C; and

in Step (2), the temperature of the spinning box was 283°C; and the pressure of the assembly was 18 MPa; and

in Step (3), the cooling was performed with cross air blow; the air speed was 0.5 m/s; and the air temperature was 22°C;

the spinning finishing was conducted with an oil roll; and the oil pick up was 0.5 wt%; and

the winding speed was 4,500 m/min.

Example 2: Preparation of Polyamide 56 Pre-Oriented Yarn with Low Shrinkage in Boiling Water

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.7; an oligomer content of 1.0wt%; a moisture content of 900 ppm; a number average molecular weight of 19,000, and a molecular weight distribution of 1.8;

the screw was heated with four zones, wherein the temperature of the first zone was 255°C; the temperature of the second zone was 270°C; the temperature of the third zone was 280°C; and the temperature of the fourth zone was 285°C; and

in Step (2), the temperature of the spinning box was 280°C; and the pressure of the assembly was 14 MPa; and

in Step (3), the cooling was performed with cross air blow; the air speed was 0.4 m/s; and the air temperature was 24°C;

the spinning finishing was conducted with an oil roll; and the oil pick up was 0.6wt%; and

the winding speed was 4,800 m/min.

Example 3: Preparation of Polyamide 56 Pre-Oriented Yarn with Low Shrinkage in Boiling Water

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.4; an oligomer content of 1.15wt%; a moisture content of 1000 ppm; a number average molecular weight of 20,000, and a molecular weight distribution of 1.7;

the screw was heated with four zones, wherein the temperature of the first zone was 250°C; the temperature of the second zone was 272°C; the temperature of the third zone was 283°C; and the temperature of the fourth zone was 282°C; and in Step (2), the temperature of the spinning box was 278°C; and the pressure of the assembly was 16 MPa; and

in Step (3), the cooling was performed with cross air blow; the air speed was 0.5 m/s; and the air temperature was 20°C;

the spinning finishing was conducted with an oil roll; and the oil pick up was 0.3wt%; and

the winding speed was 4,300 m/min.

Example 4: Preparation of Polyamide 56 Pre-Oriented Yarn with Low Shrinkage in Boiling Water

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.6; an oligomer content of 0.9wt%; a moisture content of 700 ppm; a number average molecular weight of 16,000, and a molecular weight distribution of 1.4;

the screw was heated with four zones, wherein the temperature of the first zone was 255°C; the temperature of the second zone was 270°C; the temperature of the third zone was 280°C; and the temperature of the fourth zone was 280°C; and in Step (2), the temperature of the spinning box was 285°C; the pressure of the assembly was 18 MPa; and

in Step (3), the cooling was performed with cross air blow; the air speed was 0.3 m/s; and the air temperature was 21°C;

the spinning finishing was conducted with an oil roll; and the oil pick up was 0.4wt%; and the winding speed was 4,600 m/min.

Example 5: Preparation of Polyamide 56 Pre-Oriented Yarn with Low Shrinkage in Boiling Water

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.8; an oligomer content of 1.2wt%; a moisture content of 600 ppm; a number average molecular weight was 22,000, and a molecular weight distribution was 1.2;

the screw was heated with four zones, wherein the temperature of the first zone was 255°C; the temperature of the second zone was 265°C; the temperature of the third zone was 280°C; and the temperature of the fourth zone was 285°C; and

In Step (2), the temperature of the spinning box was 282°C; and the pressure of the assembly was 13 MPa; and

In Step (3), the cooling was performed with cross air blow; the air speed was preferably 0.5 m/s; and the air temperature was 20°C;

the spinning finishing was conducted with an oil roll; the oil pick up was 0.5wt%; and

the winding speed was 4,800 m/min.

Comparative Example 1a: Preparation of Polyamide 6 Pre-Oriented Yarn

(1). Heating a polyamide 6 resin into a molten state with a screw to form a polyamide 6 melt;

(2) conveying the polyamide 6 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 6 pre-oriented yarn.

In Step (1), the polyamide 6 resin had a relative viscosity of 2.4; an oligomer content of 1.0wt%; a moisture content of 1000 ppm; a number average molecular weight of 20,000, and a molecular weight distribution of 1.7;

the screw was heated with four zones, wherein the temperature of the first zone was 225°C; the temperature of the second zone was 245°C; the temperature of the third zone was 260°C; and the temperature of the fourth zone was 265°C; and In Step (2), the temperature of the spinning box was 260°C; and the pressure of the assembly was 14 MPa; and

In Step (3), the cooling was performed with cross air blow; the air speed was preferably 0.5 m/s; the air temperature was 20°C;

the spinning finishing was conducted with an oil roll; the oil pick up was 0.3wt%; and the winding speed was 4,300 m/min.

Comparative Example 1b: Preparation of Polyamide 56 Pre-Oriented Yarn According to the process for producing polyamide 56 disclosed in JP4165106B2, a polyamide 56 resin was prepared.

(1). Heating a polyamide 56 resin into a molten state with a screw to form a polyamide 56 melt;

(2) conveying the polyamide 56 melt into a spinning box through a pipe, precisely metering the melt with a metering pump, and then injecting it into a spinning assembly, and extruding it through a spinneret orifice; and

(3) cooling, spinning finishing, drawing and winding the extruded as-spun fiber to obtain the polyamide 56 pre-oriented yarn.

In Step (1), the polyamide 56 resin had a relative viscosity of 2.4; an oligomer content of 3. 1wt%; a moisture content of 1000 ppm; a number average molecular weight was of 20,000, and a molecular weight distribution of 1.7;

the screw was heated with four zones, wherein the temperature of the first zone was 250°C; the temperature of the second zone was 272°C; the temperature of the third zone was 283°C; and the temperature of the fourth zone was 282°C; and in Step (2), the temperature of the spinning box was 278°C; and the pressure of the assembly was 16 MPa; and

in Step (3), the cooling was performed with cross air blow; the air speed was 0.5 m/s; and the air temperature was 20°C;

the spinning finishing was conducted with an oil roll; the oil pick up was 0.3wt%; and

the winding speed was 4,300 m/min.

Example 6: Preparation of Polyamide 56 Draw Textured Yarn with Low Shrinkage in Boiling Water

A polyamide 56 draw textured yarn was prepared from the polyamide 56 pro-oriented yarn prepared in Example 1.

The process for producing the polyamide 56 draw textured yarn with a low shrinkage in boiling water comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.3; and the drawing temperature was 180°C;

the speed ratio D/Y of the false twister was 1.65;

the pressure of compressed air in the interlacing device was 0.6 MPa; and the winding speed was 650 m/min; and the winding overfeed was 3%.

Example 7: Preparation of Polyamide 56 draw textured yarn with Low Shrinkage in Boiling Water

The polyamide 56 draw textured yarn was prepared from the polyamide 56 pro-oriented yarn prepared in Example 2.

The process for producing the polyamide 56 draw textured yarn with a low shrinkage in boiling water comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.25; and the drawing temperature was 200°C;

the speed ratio D/Y of the false twister was 1.8;

the pressure of compressed air in the interlacing device was 0.8 MPa; and

the winding speed was 500 m/min; and the winding overfeed was 5%.

Example 8: Preparation of Polyamide 56 draw textured yarn with Low Shrinkage in Boiling Water

The polyamide 56 draw textured yarn was prepared from the polyamide 56 pro-oriented yarn prepared in Example 3.

The process for producing the polyamide 56 draw textured yarn with a low shrinkage in boiling water comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.3; and the drawing temperature was 160°C;

the speed ratio D/Y of the false twister was 1.75;

the pressure of compressed air in the interlacing device was 0.7 MPa; and the winding speed was 550 m/min; and the winding overfeed was 4%.

Example 9: Preparation of Polyamide 56 draw textured yarn with Low Shrinkage in Boiling Water

The polyamide 56 draw textured yarn was prepared from the polyamide 56 pro-oriented yarn prepared in Example 4.

The process for producing the polyamide 56 draw textured yarn with a low shrinkage in boiling water comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.28; and the drawing temperature was 170°C;

the speed ratio D/Y of the false twister was 1.65;

the pressure of compressed air in the interlacing device was 0.3 MPa; and

the winding speed was 450 m/min; and the winding overfeed was 6%.

Example 10: Preparation of Polyamide 56 draw textured yarn with Low Shrinkage in Boiling Water

The polyamide 56 draw textured yarn was prepared from the polyamide 56 pro-oriented yarn prepared in Example 5.

The process for producing the polyamide 56 draw textured yarn with a low shrinkage in boiling water comprised

the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.2; and the drawing temperature was 180°C;

the speed ratio D/Y of the false twister was 1.7;

the pressure of compressed air in the interlacing device was 0.6 MPa; and

the winding speed was 350 m/min; and the winding overfeed was 2%.

Comparative Example 2:

A polyamide 56 draw textured yarn was prepared from the polyamide 56 pro-oriented yarn prepared in Example 3.

The process for producing the polyamide 56 draw textured yarn comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.02; and the drawing temperature was 160°C;

the speed ratio D/Y of the false twister was 1.75;

the pressure of compressed air in the interlacing device was 0.7 MPa; and the winding speed was 550 m/min; and the winding overfeed was 4%.

Comparative Example 3:

A polyamide 56 draw textured yarn was prepared from the polyamide 56 pro-oriented yarn prepared in Example 3.

The process for producing the polyamide 56 draw textured yarn comprised the following steps:
firstly, directing the polyamide 56 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 56 draw textured yarn.

The drawing ratio was 1.3; and the drawing temperature was 160°C;

the speed ratio D/Y of the false twister was 1.75;

the pressure of compressed air in the interlacing device was 0.6 MPa; and the winding speed was 900 m/min; and the winding overfeed was 4%.

Comparative Example 4:

A polyamide 6 draw textured yarn was prepared from the polyamide 6 pro-oriented yarn prepared in Comparative Example 1a.

The process for producing the polyamide 6 draw textured yarn comprised the following steps:
firstly, directing the polyamide 6 pre-oriented yarn to a first roller with a guide, conveying it through a twist stopper, and thermally drawing the pre-oriented yarn in a first hot box; then cooling and setting the pre-oriented yarn with a cooling plate, conveying it through a false twister, a second roller, and an interlacing device, and spinning finishing it with an oil roll; and finally winding the pre-oriented yarn to obtain a polyamide 6 draw textured yarn.

The drawing ratio was 1.2; and the drawing temperature was 180°C;

the speed ratio D/Y of the false twister was 1.7;

the pressure of compressed air in the interlacing device was 0.6 MPa; and the winding speed was 350 m/min; and the winding overfeed was 2%.

Comparative Example 5:

A polyamide 56 draw textured yarn was prepared from the polyamide 56 pro-oriented yarn prepared in Comparative Example 1b, according to the process described for the preparation of polyamide 56 draw textured yarn in Example 8.

Test results of the parameters of the pre-oriented yarns and the draw textured yarns prepared in Examples 1-10 and the Comparative Examples were show in Table 1.

Table 1 Comparison of properties of the fibers of the Examples according to the present invention and the Comparative Examples

| No. | Fineness (dtex) | Break Strength (cN/ dtex) | Elongation at Break (%) | Shrinkage in boiling water (%) | Dyeing Uniformity (grey scale) (grade) | Thermal Crimp (%) | Crystallinity (%) | Orientation Degree (%) |
|---|---|---|---|---|---|---|---|---|
| Example 1 | 55 | 3.5 | 80.5 | 6.5 | 4 | / | / | / |
| Example 2 | 55 | 3.8 | 78.3 | 7.0 | 4.5 | / | / | / |
| Example 3 | 95 | 3.4 | 65.2 | 7.5 | 4 | / | / | / |
| Example 4 | 95 | 3.6 | 73.4 | 7.2 | 4 | / | / | / |
| Example 5 | 80 | 4.0 | 83.2 | 6.8 | 4.5 | / | / | / |
| Example 6 | 44 | 4.2 | 36.3 | 4.8 | 4 | 45.2 | 75.3 | 85.4 |
| Example 7 | 44 | 4.0 | 34.5 | 5.5 | 4.5 | 48.3 | 67.8 | 79.8 |
| Example 8 | 77 | 3.9 | 29.4 | 5.8 | 4 | 39.8 | 63.2 | 78.3 |
| Example 9 | 77 | 3.9 | 32.5 | 5.2 | 4 | 50.2 | 70.2 | 81.0 |
| Example 10 | 66 | 4.3 | 33.0 | 5.0 | 4 | 48.3 | 73.5 | 82.3 |
| Comparative Example 1a | 95 | 3.3 | 82.3 | 8.5 | 4 | / | / | / |
| Comparative Example lb | 95 | 3.1 | 75.5 | 8.8 | 4 | / | / | / |
| Comparative Example 2 | 77 | 3.8 | 26.5 | 8.5 | 4 | 33.6 | 62.2 | 70.2 |
| Comparative Example 3 | 77 | 4.0 | 30.2 | 8.8 | 4 | 30.8 | 60.4 | 66.6 |
| Comparative Example 4 | 77 | 3.7 | 34.5 | 9.0 | 4 | 32.4 | 58.2 | 64.5 |
| Comparative Example 5 | 77 | 3.6 | 30.5 | 9.2 | 4 | 31.8 | 55.6 | 60.2 |

Compared with the polyamide fibers prepared in Comparative Examples 2-5, the polyamide 56 fibers prepared in the Examples 6-10 according to the present invention had lower shrinkage in boiling water and better mechanical properties. In addition, the polyamide 56 fibers according to the present invention had good dyeing uniformity and dimensional stability. The polyamide 56 fibers prepared in Examples 6-10 were also significantly better than those prepared in Comparative Examples 2-5.

Finally, it should be noted that the above embodiments are only used to illustrate the technical solutions of the present invention, but not to limit them. Although the present invention has been described in detail with reference to the foregoing embodiments, those ordinary skilled in the art should understand that the technical solutions described in the foregoing embodiments can be further modified, or can be equivalently replaced in terms of some or all of the technical features thereof. These modifications or replacements do not make the spirits of the corresponding technical solutions depart from the scope of technical solutions of the embodiments of the present invention.

## Claims

1. A polyamide 56 fiber, **characterized in that** raw materials for producing the polyamide 56 fiber comprise 1,5-pentane diamine and adipic acid, or a polyamide 56 resin obtained by polymerizing 1,5-pentane diamine monomer and adipic acid monomer; wherein the polyamide 56 fiber has a shrinkage in boiling water of 9% or less.

2. The polyamide 56 fiber according to claim 1, **characterized in that** the polyamide 56 fiber comprises a polyamide 56 pre-oriented yarn with a low shrinkage in boiling water and a polyamide 56 draw textured yarn with a low shrinkage in boiling water, and/or

   the polyamide 56 resin has an oligomer content of 1.2 wt% or less, and preferably 0.8 wt% or less;
   wherein the oligomer is selected from the following structures:

   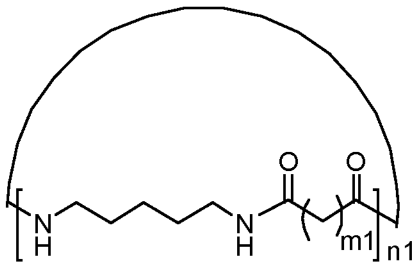
   and
   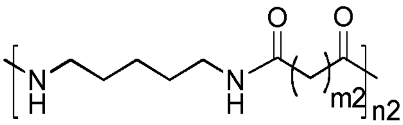
   ,

   wherein n1 and n2 are respectively selected from integers of 1-8, m1 and m2 are 4, preferably, n1 and n2 are respectively selected from integers of 1-6; more preferably, n1 and n2 each independently are integers of 1-5; and further preferably, n1 is 1, 2, 3 or 4; and n2 is 1, 2, 3, 4 or 5; and/or
   the polyamide 56 fiber comprises a bright fiber, a semi-dull fiber and a fully-dull polyamide 56 fiber.

3. The polyamide 56 fiber according to claim 2, **characterized in that** the polyamide 56 pre-oriented yarn has a shrinkage in boiling water of 9% or less, further preferably 8% or less, and still further preferably 7% or less; and/or

   the polyamide 56 pre-oriented yarn has a fineness of 10-300 dtex, preferably 20-200 dtex, further preferably 30-100 dtex, and still further preferably 50-80 dtex; and/or
   the polyamide 56 pre-oriented yarn has a break strength of 3.0-4.5 cN/dtex, preferably 3.3-4.3 cN/dtex, further preferably 3.5-4.1 cN/dtex, and still further preferably 3.7-3.9 cN/dtex; and/or
   the polyamide 56 pre-oriented yarn has an elongation at break of 60-90%, preferably 65-85%, further preferably 70-80%, and still further preferably 73-78%; and/or
   the polyamide 56 pre-oriented yarn has a dyeing uniformity (grey scale) of grade 3 or more, preferably grade 3.5 or more, further preferably grade 4.0 or more, and still further preferably grade 4.5 or more.

4. The polyamide 56 fiber according to claim 2, **characterized in that** the polyamide 56 draw textured yarn has a shrinkage in boiling water of 8% or less, further preferably 7% or less, and still further preferably 6% or less; and/or

   the polyamide 56 draw textured yarn has a fineness of 10-200 dtex, preferably 20-100 dtex, further preferably 30-80 dtex, and still further preferably 40-60 dtex; and/or

the polyamide 56 draw textured yarn has a break strength of 3.5-5.5 cN/dtex, preferably 3.8-5.0 cN/dtex, further preferably 4.0-4.7 cN/dtex, and still further preferably 4.3-4.5 cN/dtex; and/or
the polyamide 56 draw textured yarn has an elongation at break of 20-50%, preferably 25-45%, further preferably 30-40%, and still further preferably 33-36%; and/or
the polyamide 56 draw textured yarn has a crystallinity of 60% or more, preferably 63% or more, further preferably 66% or more, and still further preferably 68% or more; and/or
the polyamide 56 draw textured yarn has an orientation degree of 60% or more, preferably 65% or more, further preferably 70% or more, and still further preferably 73% or more; and/or
the polyamide 56 draw textured yarn has a dyeing uniformity (grey scale) of grade 3 or more, preferably grade 3.5 or more, further preferably grade 4.0 or more, and still further preferably grade 4.5 or more.

**5.** The polyamide 56 fiber according to claim 2, **characterized in that** the polyamide 56 draw textured yarn has a shrinkage in boiling water of 2-8%, a break strength of 3.5-5.5 cN/dtex, an elongation at break of 20-50%, a crystallinity of 60-80%, or an orientation degree of 60-90%.

**6.** A process for producing the polyamide 56 pre-oriented yarn according to claim 2 or 3, **characterized in that** the process comprises the following steps:

(1) polymerizing 1,5-pentane diamine and adipic acid to form a polyamide 56 melt; or heating a polyamide 56 resin into a molten state with a screw to form a polyamide 56 melt;
(2) conveying the polyamide 56 melt into a spinning box through a pipe, precisely metering the melt with a metering pump, and then injecting it into a spinning assembly, and extruding it through a spinneret orifice; and
(3) cooling, spinning finishing, drawing and winding the extruded as-spun fiber to obtain the polyamide 56 pre-oriented yarn.

**7.** The process according to claim 6, **characterized in that**

in step (1), the polyamide 56 resin has a relative viscosity of 2.4-2.8, and preferably 2.5-2.7; and the polyamide 56 resin has an oligomer content of 1.2 wt% or less, and preferably 0.8 wt% or less; and/or
the polyamide 56 resin has a moisture content of 600-1200 ppm, and preferably 800-1000 ppm; and/or
the polyamide 56 resin has a number average molecular weight of 15,000-22,000, and preferably 18,000-20,000, or has a molecular weight distribution of 1.0-2.0, and preferably 1.2-1.8; and/or
the screw is heated with four zones, wherein the temperature of a first zone is 245-260°C, and preferably 250-255°C; the temperature of a second zone is 260-275°C, and preferably 265-270°C; the temperature of a third zone is 275-285°C, and preferably 278-283°C; and the temperature of a fourth zone is 280-285°C, and preferably 282-284°C.

**8.** The process according to claim 6, **characterized in that**

in Step (2), the temperature of the box is 275-285°C, and preferably 280-283°C; the pressure of the assembly is 13-20 MPa, and preferably 15-18 MPa; and/or
in Step (3), the cooling comprises cooling with side air blow or cross air blow, preferably cooling with cross air blow; and an air speed is preferably 0.2-0.6 m/s, and more preferably 0.3-0.5 m/s; and/or an air temperature is 18-25°C, preferably 20-23°C, and more preferably 21-22°C; and/or
the spinning finishing is conducted with an oil roll; and an oil pick up is 0.2-0.8 wt%, preferably 0.3-0.7 wt%, and more preferably 0.4-0.5 wt%; and/or
a winding speed is 4,000-5,500 m/min, preferably 4,300-5,000 m/min, and more preferably 4,500-4,800 m/min.

**9.** A process for producing the polyamide 56 draw textured yarn according to any of claim 2, 4 or 5, **characterized in that** the process comprises the following steps:

a) directing the polyamide 56 pre-oriented yarn to a first roller with a guide; conveying it through a twist stopper, and thermally drawing the pre-oriented yarn in a first hot box;
b) cooling and setting the pre-oriented yarn with a cooling plate; conveying it through a false twister, a second roller, and an interlacing device; and spinning finishing it with an oil roll; and
c) winding the pre-oriented yarn to obtain a polyamide 56 draw textured yarn.

**10.** The process according to claim 9, **characterized in that**

a thermal drawing ratio is 1.1-1.5, preferably 1.15-1.4, and more preferably 1.2-1.3; and/or, a thermal drawing temperature is 150-220°C, preferably 160-200°C, and more preferably 170-180°C; and/or
a speed ratio D/Y of the false twister is 1.3-2.2, preferably 1.5-2.0, and more preferably 1.7-1.8; and/or
a pressure of compressed air in the interlacing device is 0.3-1.5 MPa, preferably 0.5-1.2 MPa, and more preferably 0.7-0.8 MPa; and/or
a winding speed is 300-800 m/min, preferably 400-700 m/min, and more preferably 500-600 m/min; and/or a winding overfeed is 2-8%, preferably 3-6%, and more preferably 4-5%.

**11.** Use of the polyamide 56 fiber according to any one of claims 1 to 5 in knitted or woven fabrics.

## INTERNATIONAL SEARCH REPORT

International application No.
**PCT/CN2020/072235**

**A. CLASSIFICATION OF SUBJECT MATTER**

D01F 6/60(2006.01)i；D01F 6/90(2006.01)i；C08L 77/06(2006.01)i；C08G 69/28(2006.01)n；D01F 1/10(2006.01)n

According to International Patent Classification (IPC) or to both national classification and IPC

**B. FIELDS SEARCHED**

Minimum documentation searched (classification system followed by classification symbols)

D01F; C08L; C08G

Documentation searched other than minimum documentation to the extent that such documents are included in the fields searched

Electronic data base consulted during the international search (name of data base and, where practicable, search terms used)

CNABS; CNTXT; VEN; DWPI; CNKI; WEB OF SCIENCE: 聚酰氨, 聚酰胺, 己二酸, 尼龙, 戊二胺, 沸水收缩率, 齐聚物, 耐高温, nylon, polyamid, diamine, diacid, pentamethylene diamine, oligomer

**C. DOCUMENTS CONSIDERED TO BE RELEVANT**

| Category* | Citation of document, with indication, where appropriate, of the relevant passages | Relevant to claim No. |
|---|---|---|
| X | CN 106884215 A (SHANGHAI CATHAY BIOTECHNOLOGY R & D CENTER CO., LTD. et al.) 23 June 2017 (2017-06-23) claims 1-4, description, paragraphs 0027-0063 | 1, 11 |
| Y | CN 106884215 A (SHANGHAI CATHAY BIOTECHNOLOGY R & D CENTER CO., LTD. et al.) 23 June 2017 (2017-06-23) claims 1-4, description paragraphs 0027-0063 | 2-10 |
| Y | CN 105330850 A (BENSONG ENGINEERING PLASTICS (HANGZHOU) CO., LTD.) 17 February 2016 (2016-02-17) description, paragraphs 0008-0036 | 2-10 |
| Y | CN 1232047 A (TORAY INDUSTRIES, INC.) 20 October 1999 (1999-10-20) description, page 3, paragraph 2, page 8, paragraph 2 | 2-10 |
| A | CN 106835329 A (SHANGHAI CATHAY BIOTECHNOLOGY R & D CENTER CO., LTD. et al.) 13 June 2017 (2017-06-13) entire document | 1-11 |
| A | CN 106868624 A (SHANGHAI CATHAY BIOTECHNOLOGY R & D CENTER CO., LTD. et al.) 20 June 2017 (2017-06-20) entire document | 1-11 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 February 2020** | **08 April 2020** |
| Name and mailing address of the ISA/CN<br>**China National Intellectual Property Administration (ISA/CN)**<br>**No. 6, Xitucheng Road, Jimenqiao Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/072235**

**C. DOCUMENTS CONSIDERED TO BE RELEVANT**

| Category* | Citation of document, with indication, where appropriate, of the relevant passages | Relevant to claim No. |
|---|---|---|
| A | EP 0476583 A2 (MITSUI PETROCHEMICAL INDUSTRIES, LTD.) 25 March 1992 (1992-03-25)<br>entire document | 1-11 |

Form PCT/ISA/210 (second sheet) (January 2015)

**INTERNATIONAL SEARCH REPORT**
**Information on patent family members**

International application No.
**PCT/CN2020/072235**

| Patent document cited in search report | | | Publication date (day/month/year) | Patent family member(s) | | | Publication date (day/month/year) |
|---|---|---|---|---|---|---|---|
| CN | 106884215 | A | 23 June 2017 | None | | | |
| CN | 105330850 | A | 17 February 2016 | CN | 105330850 | B | 09 February 2018 |
| CN | 1232047 | A | 20 October 1999 | CN | 1145656 | C | 14 April 2004 |
| | | | | KR | 19990082927 | A | 25 November 1999 |
| | | | | EP | 0947536 | A3 | 12 December 2001 |
| | | | | DE | 69909003 | D1 | 31 July 2003 |
| | | | | EP | 0947536 | A2 | 06 October 1999 |
| | | | | ID | 22361 | A | 07 October 1999 |
| | | | | US | 6169161 | B1 | 02 January 2001 |
| | | | | KR | 100603151 | B1 | 24 July 2006 |
| | | | | EP | 0947536 | B2 | 13 December 2006 |
| | | | | DE | 69909003 | T2 | 06 May 2004 |
| | | | | EP | 0947536 | B1 | 25 June 2003 |
| | | | | ES | 2200470 | T5 | 16 August 2007 |
| | | | | DE | 69909003 | T3 | 12 July 2007 |
| | | | | JP | 4491848 | B2 | 30 June 2010 |
| | | | | ES | 2200470 | T3 | 01 March 2004 |
| | | | | JP | H11343341 | A | 14 December 1999 |
| | | | | TW | 530071 | B | 01 May 2003 |
| CN | 106835329 | A | 13 June 2017 | CN | 106835329 | B | 12 November 2019 |
| CN | 106868624 | A | 20 June 2017 | CN | 106868624 | B | 23 August 2019 |
| EP | 0476583 | A2 | 25 March 1992 | EP | 0476583 | A3 | 10 February 1993 |
| | | | | DE | 69121153 | D1 | 05 September 1996 |
| | | | | KR | 950007996 | B1 | 24 July 1995 |
| | | | | CA | 2051783 | C | 29 April 1997 |
| | | | | CA | 2051783 | A1 | 20 March 1992 |
| | | | | TW | 205559 | B | 11 May 1993 |
| | | | | US | 5214125 | A | 25 May 1993 |
| | | | | EP | 0476583 | B1 | 31 July 1996 |
| | | | | DE | 69121153 | T2 | 09 January 1997 |
| | | | | AT | 140941 | T | 15 August 1996 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 106835329 A
- CN 106868624 A
- CN 106868623 A
- CN 100489168 C
- CN 108503826 A
- CN 108503824 A
- JP 4165106 B